# EUROPEAN PATENT SPECIFICATION

(11) **EP 4 674 798 B1**
(45) Date of publication and mention of the grant of the patent: **07.10.2026**
(21) Application number: 25187001.0
(22) Date of filing: 02.07.2025
(51) Int. Cl.: B66B 1/34

(54) **ELEVATOR SYSTEM AND METHOD FOR UPDATING CODE ON ELEVATOR COMPONENTS IN A BUILDING**
AUFZUGSSYSTEM UND VERFAHREN ZUR AKTUALISIERUNG VON CODES IN AUFZUGSKOMPONENTEN IN EINEM GEBÄUDE
SYSTÈME D'ASCENSEUR ET PROCÉDÉ DE MISE À JOUR DE CODES INFORMATIQUES DE COMPOSANTS D'ASCENSEUR DANS UN BÂTIMENT

(30) Priority: 03.07.2024 US 202418763411
(43) Date of publication of application: 07.01.2026
(73) Proprietor: Otis Elevator Company, Farmington, Connecticut 06032 (US)
(72) Inventor: Scoville, Bradley Armand, Farmington, CT 06032 (US); Chapman, Ashley, Farmington, CT 06032 (US); Wos, Lindsay, Farmington, CT 06032 (US); Rynearson, Steven, Farmington, CT 06032 (US); Goldstein, Paul, Farmington, CT 06032 (US)
(74) Representative: Winter, Brandl - Partnerschaft mbB

(56) References cited:
- EP-A1- 3 901 078
- WO-A1-2024/088504
- US-A1- 2019 112 148
- US-A1- 2020 293 660
- US-A1- 2022 191 092

## Description

### BACKGROUND

The embodiments described herein relate to passenger conveyance systems, including but not limited to moving walkways and escalators elevator system, and more specifically to a system and method for updating code in such systems.

Embedded devices installed in a building are managed by field engineers and maintenance persons such as mechanics. Software maintenance may include performing software updates to all relevant components throughout a building. If this process is performed ah-hoc, disruptions in service may occur. In addition, if the customer, such as the building system operator, is unsatisfied with the updates, further updates and disruptions may result. US 2019/0112148 A1 discloses a software commissioning system comprising an intermediary controller, equipment communicative coupled to the intermediary controller, and an augmenting device. The intermediary controller facilitates commissioning or updating operations. The augmenting device comprises a scanner capturing information from one or more codes associated with the equipment, and a control circuit automatically executing commissioning or updating operations with respect to the equipment and in response to the scanner capturing the information, and wherein, during commissioning or updating operations, the control circuit communicates the information to a backend sub-system to initiate a remote verification service that verifies the equipment and causes the downloading of software for the equipment. US 2022/191092 A1 refers to methods and systems for commissioning a communication gateway with a portable device in a transportation system, and further refers to a communication gateway of a transportation system and a computer program product.

### BRIEF SUMMARY

Disclosed is an elevator system for installing updated code on elevator components in a building, the system including: a component management system (CMS); an elevator system controller (for simplicity, an ESC) in the building, operationally coupled to the components; a gateway that communicates with the ESC and the components over a first network and with the CMS over a second network, wherein the gateway is configured to: receive a first signal from the CMS that includes a notification of the updated code for the components; receive a second signal from the ESC that includes instructions for a preliminary installation of the updated code, and thereafter execute the preliminary installation; and receive a third signal from the ESC that includes instructions for a secondary installation of the updated code on the components, and thereafter execute the secondary installation.

Disclosed is a method of installing updated code on elevator components in a building, the method including: receiving, by a gateway, a first signal from a component management system (CMS) that includes a notification of the updated code for the components; receiving, by the gateway, a second signal from an elevator system controller (ESC) that includes instructions for a preliminary installation of the updated code, and thereafter executing the preliminary installation; and receiving, by the gateway, a third signal from the ESC that includes instructions for a secondary installation of the updated code on the components, and thereafter executing the secondary installation.

### BRIEF DESCRIPTION OF THE DRAWINGS

The present disclosure is illustrated by way of example and not limited in the accompanying figures in which like reference numerals indicate similar elements.
FIG. 1 is a schematic illustration of an elevator system that may employ various embodiments of the present disclosure;
FIG. 2 shows a system for updating code in elevator systems, according to an embodiment;
FIG. 3 shows a method for updating code in elevator systems, according to an embodiment; and
FIG. 4 shows a method for updating code in elevator systems having different classes of components, according to an embodiment.

### DETAILED DESCRIPTION

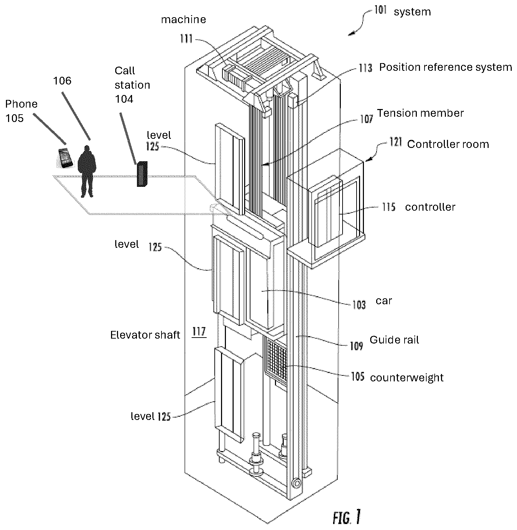

FIG. 1 is a perspective view of an elevator system 101 including an elevator car 103, a counterweight 105, a tension member 107, a guide rail (or rail system) 109, a machine (or machine system) 111, a position reference system 113, and an electronic elevator controller (controller) 115. The elevator car 103 and counterweight 105 are connected to each other by the tension member 107. The tension member 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft (or hoistway) 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counter weight, as known in the art. For example, without limitation, the position reference system 113 can be an encoder, sensor, or other system and can include velocity sensing, absolute position sensing, etc., as will be appreciated by those of skill in the art.

The controller 115 may be located, as shown, in a controller room 121 of the elevator shaft 117 and is configured to control the operation of the elevator system 101, and particularly the elevator car 103. It is to be appreciated that the controller 115 need not be in the controller room 121 but may be in the hoistway or other location in the elevator system. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101. In one embodiment, the controller may be located remotely or in the cloud.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor. The machine 111 may include a traction sheave that imparts force to tension member 107 to move the elevator car 103 within elevator shaft 117.

Although shown and described with a roping system including tension member 107, elevator systems that employ other methods and mechanisms of moving an elevator car within an elevator shaft may employ embodiments of the present disclosure. For example, embodiments may be employed in ropeless elevator systems using a linear motor to impart motion to an elevator car. Embodiments may also be employed in ropeless elevator systems using a hydraulic lift to impart motion to an elevator car. Embodiments may also be employed in ropeless elevator systems using self-propelled elevator cars (e.g., elevator cars equipped with friction wheels, pinch wheels or traction wheels). FIG. 1 is merely a non-limiting example presented for illustrative and explanatory purposes.

Though elevator systems are disclosed in depth herein as a nonlimiting example, the present disclosure is equally applicable to other forms of passenger conveyance systems, including but not limited to moving walkways and escalators.

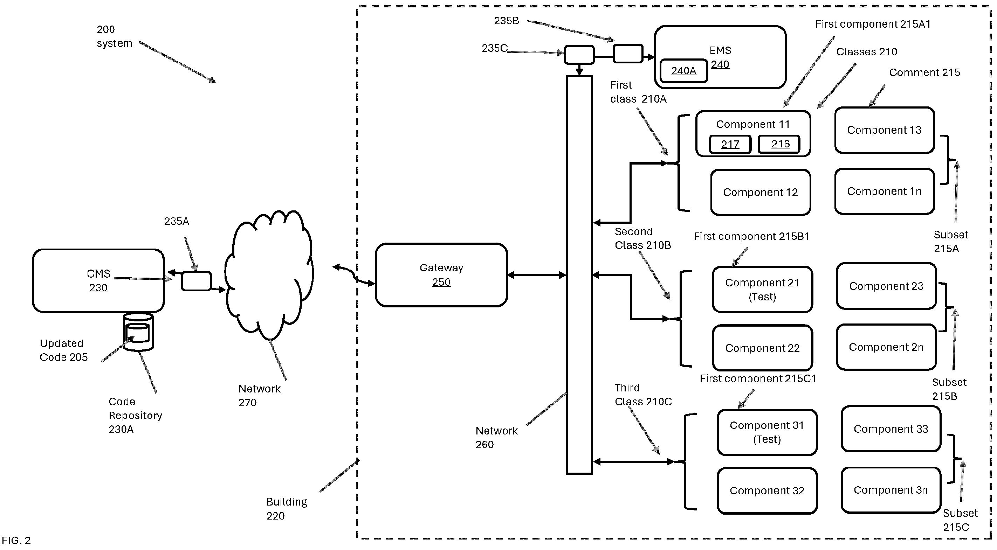

Turning to FIG. 2, disclosed herein is an elevator system 200 for installing updated code 205 (software or firmware) on elevator components 215 in a building 220, which may in one embodiment be organized as different classes 210 of components 215, though this is not intended on limiting the scope of the embodiments. Each component 215 may have an electronic controller 217 with code 205 stored on non-transient memory on the controller 217. The classes 210 of components 215 include for example, a first class 210A of components 215 that include an elevator car 103 (FIG. 1). A second class 210B of components 215 may include a lobby call station 104 (FIG. 1). A third class 210C of components 215 may include a mobile device 105 (FIG. 1), e.g., a mobile phone belonging to a person 106 (FIG. 1) such as a mechanic, containing code 205 that calls the elevator car 103.

The system 200 includes a component management system (CMS) 230 (otherwise referred to as a device management system). The CMS 230 may be a cloud service having a code repository 230A. The system 200 includes an elevator system controller (ESC) 240 (which may be the same as controller 115 shown in FIG. 1) in the building 220, operationally coupled to the components 215. A gateway 250 communicates with the ESC 240 and the components 215 over a first network 260, such as a controller area network (CAN) and with the CMS 230 over a second network 270 such as a wide area network (WAN). These networks are referenced for example only.

According to the embodiments, the gateway 250 is configured to receive a first signal 235A from the CMS 230 that includes a notification of the updated code 205 for, e.g., the first class 210A of the components 215. The code may be in a code repository 230A at the CMS 230. The gateway 250 is configured to receive a second signal 235B from the ESC 240 that includes instructions for a preliminary installation of the updated code 205. The gateway 250 may then execute the preliminary installation.

The preliminary installation is for testing the code 205 to make sure it operates within acceptable thresholds such that it may operate sufficiently on all such components 215 of the class 210 of components 215 in the building 220 and for other cybersecurity review. **In** one embodiment, the preliminary installation includes installing the updated code 205 on a virtual system 240A, a first component 215A1 within the first class 210A of components 215, or a subset 215A of components 215 within the first class 210A of components 215.

The first component 215A1 may be a designated test component with sensors 216, such as velocity, acceleration, vibration, sound or other relevant sensors, configured to detect operating dynamics of the component 215A1. The sensors 216 may feed data representing those dynamics to the ESC 240 for further processing and/or review by the mechanic 106 or supervisor. The virtual system 240A may be a simulation of the first component 210A1 controlled by the ESC 240. In one embodiment, the preliminary installation may include installing a reduced function set of the updated code 205 on the virtual system 240A, the first component 210A1 within the first class 210A of components 215, or the subset 215A of components 215 within the first class of components 215. This may enable testing certain aspects of the code 205 or sequentially testing aspects of the code 205.

As seen in FIG. 2, each of the classes 210A-210C of components 215 can have n-components 215. Four components of each class 210 are shown for illustration purposes. Each of the classes 210A-210C may have a designated test component 215A1, 215B1, 215C1 which may receive the updated code 205 during preliminary installation when the code is directed to the respective class 210 of components 215. Similarly, each of the classes 210A-210C may have a designated subset of components 215A, 215B, 215C which may receive the updated code 205 during preliminary installation when the code is directed to the respective class 210 of components 215.

According to the embodiments, once the code 205 is approved, either automatically by the ESC 240 or by a mechanic 106, supervisor or other authorized person, the gateway 250 may receive a third signal 235C from the ESC 240. The third signal 235C may include instructions for a secondary installation of the updated code 204 across the first class 210A of the components 215, which may be a complete, system wide installation or may be a further partial installation, depending on system requirements. The gateway 250 may then execute the secondary installation.

The secondary installation may include the gateway 250 installing the updated code 205 on each component 215 within the first class 210A of components 215. In one embodiment, the secondary installation may include the gateway 250 installing the updated code 205 consecutively on different subsets 215B, 215B of the first class 210A of components 215B based on different factors. The factors may include utilization patterns of the subsets 215A, 215B 215C of components 215. The factors may include locations of the components 214 within the building 220 or within the subsets 215A, 215B 215C.

For example, if such installation requires the component becoming temporarily inactive, the code 205 may be installed during low use time, such as overnight, in one or more of the components. Alternatively, if the components 215 are different elevator cars in a common elevator bank, the code 205 may be installed in one or more elevator cars at a time, but fewer than all elevators at once, to enable providing continuous service to passengers. Alternatively, if the components have redundant storage for their operating systems, such as a RAID (redundant array of independent disks) system, the code 205 may be installed on backup storage which can be swapped at the first opportunity, manually or automatically, with the outdated storage, which may then be updated as well.

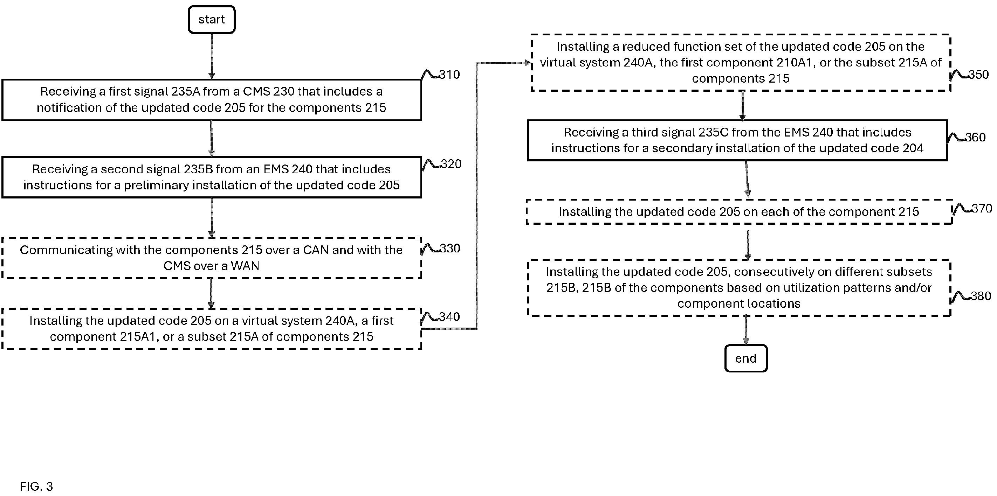

Turning to FIG. 3, a flowchart shows a method of installing updated code 205 on elevator components 215 in a building 220. As indicated, the components may include an elevator car 103, a lobby call station 103B, and/or a mobile phone 103C containing software that calls the elevator car 103. In FIG. 3, boxes in dashed lines in the flow chart represent further explanations of one or more preceding steps and are not intended on limiting the scope of the embodiments.

As shown in block 310, the method 200 includes receiving, by a gateway 250, a first signal 235A from a component management system (CMS) 230 that includes a notification of the updated code 205 for the components 215. As indicated, the updated code 205 is software or firmware. As indicated, the CMS 230 may be a cloud service.

As shown in block 320, the method includes receiving, by the gateway 250, a second signal 235B from an elevator system controller (for simplicity, an ESC) 240 that includes instructions for a preliminary installation of the updated code 205. The gateway 250 thereafter executes the preliminary installation.

As shown in block 330, the method may include communicating, by the gateway 250, with the components 215 over a controller area network (CAN) and with the CMS over a wide area network (WAN). Both network types may be wired networks or wireless networks, in whole or part. Signals may be compiled on either end, in whole or part, and portions of the signals may be spliced together at either end or along the communication path, e.g., at an intermediate network hop.

As shown in block 340, the method may include executing, by the gateway 250, the preliminary installation by installing the updated code 205 on a virtual system 240A, a first component 215A1, or a subset 215A of components 215 within the first class 210A of components 215.

As shown in block 350, the method may include executing, by the gateway 250, the preliminary installation installing a reduced function set of the updated code 205. The code may also be installed on the virtual system 240A, the first component 210A1, or the subset 215A of components 215 within the first class of components 215. As indicated, the virtual system 240A may be a simulation of the first component 210A1 controlled by the ESC 240.

As shown in block 360, the method includes receiving, by the gateway 250, a third signal 235C from the ESC 240 that includes instructions for a secondary installation of the updated code 204 on the components 215. The gateway 250 thereafter executes the secondary installation.

As shown in block 370, the method may include executing, by the gateway 250, the secondary installation by installing the updated code 205 on each the components 215.

As shown in block 380, the method may include executing, by the gateway 250, the secondary installation by installing the updated code 205 consecutively on different subsets 215B, 215B of the components 215B based on various factors. The factors may include one or more of utilization patterns of the subsets and locations of the components within building or within the subsets.

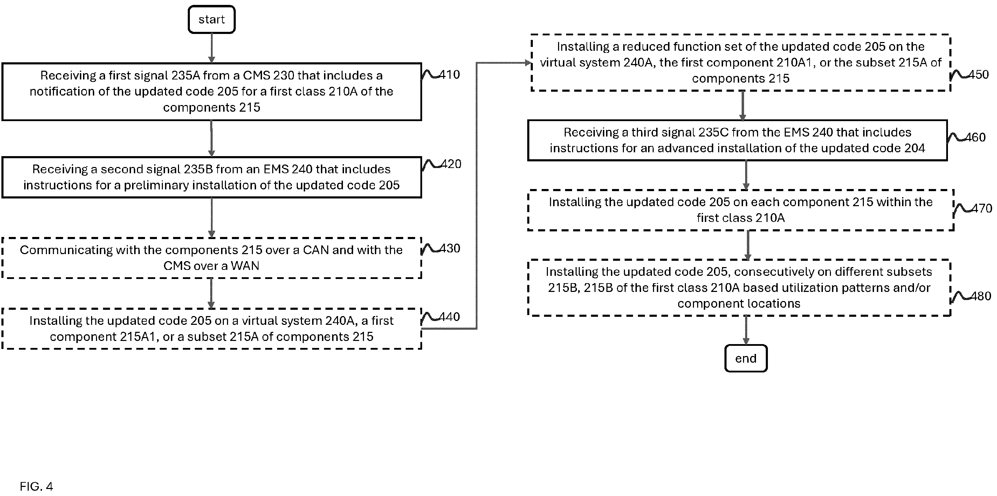

Turning to FIG. 4, a flowchart shows a method of installing updated code 205 on different classes 210 of elevator components 215 in a building 220. As indicated, the classes 210 of components may include the first class 210A of components 215 that include an elevator car 103. A second class 210B of components 215 may include a lobby call station 103B. A third class 210C of components 215 may include a mobile phone 103C containing software that calls the elevator car 103. In FIG. 3, boxes in dashed lines in the flow chart represent further explanations of one or more preceding steps and are not intended on limiting the scope of the embodiments.

As shown in block 410, the method 200 includes receiving, by a gateway 250, a first signal 235A from a component management system (CMS) 230 that includes a notification of the updated code 205 for a first class 210A of the components 215. As indicated, the updated code 205 is software or firmware. As indicated, the CMS 230 may be a cloud service.

As shown in block 420, the method includes receiving, by the gateway 250, a second signal 235B from an elevator system controller (for simplicity an ESC) 240 that includes instructions for a preliminary installation of the updated code 205. The gateway 250 thereafter executes the preliminary installation.

As shown in block 430, the method may include communicating, by the gateway 250, with the components 215 over a controller area network (CAN) and with the CMS over a wide area network (WAN). Both network types may be wired networks or wireless networks, in whole or part. Signals may be compiled on either end, in whole or part, and portions of the signals may be spliced together at either end or along the communication path, e.g., at an intermediate network hop.

As shown in block 440, the method may include executing, by the gateway 250, the preliminary installation by installing the updated code 205 on a virtual system 240A, a first component 215A1 within the first class 210A of components 215, or a subset 215A of components 215 within the first class 210A of components 215.

As shown in block 450, the method may include executing, by the gateway 250, the preliminary installation installing a reduced function set of the updated code 205. The code may also be installed on the virtual system 240A, the first component 210A1 within the first class 210A of components 215, or the subset 215A of components 215 within the first class of components 215. As indicated, the virtual system 240A may be a simulation of the first component 210A1 controlled by the ESC 240.

As shown in block 460, the method includes receiving, by the gateway 250, a third signal 235C from the ESC 240 that includes instructions for an advanced installation of the updated code 204 across the first class 210A of the components 215. The gateway 250 thereafter executes the advanced installation.

As shown in block 470, the method may include executing, by the gateway 250, the advanced installation by installing the updated code 205 on each component 215 within the first class 210A of components 215.

As shown in block 480, the method may include executing, by the gateway 250, the advanced installation by installing the updated code 205 consecutively on different subsets 215B, 215B of the first class 210A of components 215B based on various factors. The factors may include one or more of utilization patterns of the subsets and locations of the components within building or within the subsets.

Thus, the disclosed embodiments provide a component management system 230 (CMS, e.g., a cloud service, in one non-limiting embodiment) that distributes code 205 (software or firmware) to different facilities, such as buildings 220, for updating code 205 on system components 215 (e.g., embedded devices). The code 205 is delivered to a gateway 250 (e.g., a local management system) in a building 220 that manages code 205, which may be integral with or separate from a building elevator system controller 240 (for simplicity, an ESC). The ESC 240 and gateway 250 communicate with other to determine which components 215 in the building 220 receive code updates and when the updates are pushed out to the components 215. In the disclosed embodiments, supervisory approvals, such as from persons evaluating the components 215 that are operating with the code 205, may be obtained before pushing the code to the larger set of components 215.

Various classes (e.g., classifications or types) 210 of components 215 may be included in a building 220 or associated with the building services, such as controllers 217 of elevators 103, call panels (or stations) 104, and code 205 embedded on mobile devices 105, as non-limiting examples. The classes 210 of components 215 may also include different generations of the same components 215, such as legacy and new versions of the components.

When a new version of code 205 for a class 210 of components 215 is released, the CMS 230 identifies the location (e.g., the building 220) with that class 210 of components 215 and transmits the code 205 to the gateway 250 in the building 220. The gateway 250 receives the code 205 and, based on instructions from the ESC 240, uploads the code 205 to a test component 215A1 for the class 210A of components 215. The test component 215A1 may be a virtual system 240A or actual component 215A1. The operation of the test component 215A1 is evaluated, e.g., by personnel 106 or by the ESC 240. Once operational parameters are above a threshold capability (e.g., quality level), which may be determined automatically by the ESC 240 or by an authorized person 106, the code is approved.

Once the code 205 is approved, the ESC 240 instructs the gateway 240 to update each component 215 in the class 210 of components 215 in the building 220. The updates may be executed via a predetermined strategy by the ESC 240. The strategy may depend on usage, grouping, and/or location of the class 210 of components 215 within the building 220, e.g., to minimize disruption.

The disclosed embodiments reduce human interaction in the code download and evaluation. The process, from code release to the distribution on the components in a building may be automated. This has the added benefit of reducing cyber security risks.

Wireless connections identified above may apply protocols that include local area network (LAN, or WLAN for wireless LAN) protocols and/or a private area network (PAN) protocols. LAN protocols include WiFi technology, based on the Section 802.11 standards from the Institute of Electrical and Electronics Engineers (IEEE). PAN protocols include, for example, Bluetooth Low Energy (BTLE), which is a wireless technology standard designed and marketed by the Bluetooth Special Interest Group (SIG) for exchanging data over short distances using short-wavelength radio waves. PAN protocols also include Zigbee, a technology based on Section 802.15.4 protocols from the IEEE, representing a suite of high-level communication protocols used to create personal area networks with small, low-power digital radios for low-power low-bandwidth needs. Such protocols also include Z-Wave, which is a wireless communications protocol supported by the Z-Wave Alliance that uses a mesh network, applying low-energy radio waves to communicate between devices such as appliances, allowing for wireless control of the same.

Other applicable protocols include Low Power WAN (LPWAN), which is a wireless wide area network (WAN) designed to allow long-range communications at a low bit rates, to enable end devices to operate for extended periods of time (years) using battery power. Long Range WAN (LoRaWAN) is one type of LPWAN maintained by the LoRa Alliance, and is a media access control (MAC) layer protocol for transferring management and application messages between a network server and application server, respectively. Such wireless connections may also include radiofrequency identification (RFID) technology, used for communicating with an integrated chip (IC), e.g., on an RFID smartcard. In addition, Sub-1Ghz RF equipment operates in the ISM (industrial, scientific and medical) spectrum bands below Sub 1Ghz - typically in the 769 - 935 MHz, 315 Mhz and the 468 Mhz frequency range. This spectrum band below 1Ghz is particularly useful for RF IOT (internet of things) applications. Other LPWAN-IOT technologies include narrowband internet of things (NB-IOT) and Category M1 internet of things (Cat M1-IOT). Wireless communications for the disclosed systems may include cellular, e.g. 2G/3G/4G (etc.). The above is not intended on limiting the scope of applicable wireless technologies.

Wired connections identified above may include connections (cables/interfaces) under RS (recommended standard)-422, also known as the TIA/EIA-422, which is a technical standard supported by the Telecommunications Industry Association (TIA) and which originated by the Electronic Industries Alliance (EIA) that specifies electrical characteristics of a digital signaling circuit. Wired connections may also include (cables/interfaces) under the RS-232 standard for serial communication transmission of data, which formally defines signals connecting between a DTE (data terminal equipment) such as a computer terminal, and a DCE (data circuit-terminating equipment or data communication equipment), such as a modem. Wired connections may also include connections (cables/interfaces) under the Modbus serial communications protocol, managed by the Modbus Organization. Modbus is a sever/client protocol designed for use with its programmable logic controllers (PLCs) and which is a commonly available means of connecting industrial electronic devices. Wireless connections may also include connectors (cables/interfaces) under the PROFibus (Process Field Bus) standard managed by PROFIBUS & PROFINET International (PI). PROFibus which is a standard for fieldbus communication in automation technology, openly published as part of IEC (International Electrotechnical Commission) 61158. Wired communications may also be over a Controller Area Network (CAN) bus. A CAN is a vehicle bus standard that allow microcontrollers and devices to communicate with each other in applications without a host computer. CAN is a message-based protocol released by the International Organization for Standards (ISO). The above is not intended on limiting the scope of applicable wired technologies.

As indicated, when data is transmitted over a network between end processors, the data may be transmitted in raw form or may be processed in whole or part at any one of the end processors or an intermediate processor, e.g., at a cloud service or other processor. The data may be parsed at any one of the processors, partially or completely processed or complied, and may then be stitched together or maintained as separate packets of information.

Each processor identified herein may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory identified herein may be but is not limited to a random access memory (RAM), read only memory (ROM), or other electronic, optical, magnetic or any other computer readable medium. Embodiments can be in the form of processor-implemented processes and devices for practicing those processes, such as processor. Embodiments can also be in the form of computer code based modules, e.g., computer program code (e.g., computer program product) containing instructions embodied in tangible media (e.g., non-transitory computer readable medium), such as floppy diskettes, CD ROMs, hard drives, on processor registers as firmware, or any other non-transitory computer readable medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes an device for practicing the exemplary embodiments. When implemented on a general-purpose microprocessor, the computer program code segments configure the microprocessor to create specific logic circuits.

The terminology used herein is for the purpose of describing particular embodiments only and is not intended to be limiting of the present disclosure. The term "about" is intended to include the degree of error associated with measurement of the particular quantity and/or manufacturing tolerances based upon the equipment available at the time of filing the application. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

## Claims

1. An elevator system (200) for installing updated code (205) on elevator components (215) in a building (220), the system (200) comprising:
a component management system (CMS) (230);
an elevator system controller (ESC) (240) in the building (220), operationally coupled to the components (215);
a gateway (250) that communicates with the ESC (240) and the components (215) over a first network (260) and with the CMS (230) over a second network (270),
**characterized in that** the gateway (250) is configured to:
receive a first signal (235A) from the CMS (230) that includes a notification of the updated code (205) for the components (215);
receive a second signal (235B) from the ESC (240) that includes instructions for a preliminary installation of the updated code (205), and thereafter execute the preliminary installation; and
receive a third signal (235B) from the ESC (240) that includes instructions for a secondary installation of the updated code (205) on the components (215), and thereafter execute the secondary installation.

2. The system (200) of claim 1, wherein the components (215) include classes (210) of components (215), including one or more of:
a first class (210A) of components (215) that include an elevator car (103);
a second class (210B) of components (215) that include a lobby call station (104); or
a third class (210C) of components (215) that include a mobile phone (105) containing software that calls the elevator car (103).

3. The system (200) of claim **1,** wherein the gateway (250) is configured to execute the preliminary installation including installing the updated code (205) on a virtual system (240A), a first component (215A1) within a first class (210A) of components (215), or a subset (215A) of components (215) within the first class (210A) of components (215).

4. The system (200) of claim 3, wherein the gateway (250) is configured to execute the preliminary installation including installing a reduced function set of the updated code (205) on the virtual system (240A), the first component (215A1) within the first class (210A) of components (215), or the subset (215A) of components (215) within the first class (210A) of components (215), or
the virtual system (240A) is a simulation of the first component (215A1) controlled by the ESC (240).

5. The system (200) of claim **1,** wherein the gateway (250) is configured to execute the secondary installation including installing the updated code (205) on each component (215) within a first class (210A) of components (215), and preferably
the gateway (250) is configured to execute the secondary installation including installing the updated code (205), consecutively on different subsets of the first class (210A) of components (215) based on one or more of: utilization patterns of the subsets (215A, 215B, 215C); and locations of the components (215) within building or within the subsets (215A, 215B, 215C).

6. The system (200) of claim **1,** wherein the updated code (205) is software or firmware.

7. The system (200) of claim **1,** wherein the CMS (230) is a cloud service.

8. The system (200) of claim 7, wherein the gateway (250) communicates with the components (215) over a controller area network (CAN) and with the CMS (230) over a wide area network (WAN).

9. A method of installing updated code (205) on elevator components (215) in a building (220), the method comprising:
receiving, by a gateway (250), a first signal (235A) from a component management system (CMS) (230) that includes a notification of the updated code (205) for the components (215);
receiving, by the gateway (250), a second signal (235B) from an elevator system controller (ESC) (240) that includes instructions for a preliminary installation of the updated code (205), and thereafter executing the preliminary installation; and
receiving, by the gateway (250), a third signal (235B) from the ESC (240) that includes instructions for a secondary installation of the updated code (205) on the components (215), and thereafter executing the secondary installation.

10. The method of claim 9, wherein the components (215) include classes (210) of components (215), including one or more of:
a first class (210A) of components (215) that include an elevator car (103);
a second class (210B) of components (215) that include a lobby call station (104); or
a third class (210C) of components (215) that include a mobile phone (105) containing software that calls the elevator car (103).

11. The method of claim 9, comprising
executing, by the gateway (250), the preliminary installation by installing the updated code (205) on a virtual system (240A), a first component (215A1) within a first class (210A) of components (215), or a subset (215A) of components (215) within the first class (210A) of components (215).

12. The method of claim 11, comprising
executing, by the gateway (250), the preliminary installation by installing a reduced function set of the updated code (205) on the virtual system (240A), the first component (215A1) within the first class (210A) of components (215), or the subset (215A) of components (215) within the first class (210A) of components (215), or
the virtual system (240A) is a simulation of the first component (215A1) controlled by the ESC (240).

13. The method of claim 9, comprising
executing, by the gateway (250), the secondary installation by installing the updated code (205) on each component (215) within a first class (210A) of components (215), and preferably comprises:
executing, by the gateway (250), the secondary installation by installing the updated code (205), consecutively on different subsets of the first class (210A) of components (215) based on one or more of: utilization patterns of the subsets (215A, 215B, 215C); and locations of the components (215) within building or within the subsets (215A, 215B, 215C).

14. The method of claim 9, wherein the updated code (205) is software or firmware.

15. The method of claim 9, wherein the CMS (230) is a cloud service, and preferably wherein the method comprises
communicating, by the gateway (250), with the components (215) over a controller area network (CAN) and with the CMS (230) over a wide area network (WAN).

## Patentansprüche

1. Aufzugssystem (200) zum Installieren eines aktualisierten Codes (205) auf Aufzugskomponenten (215) in einem Gebäude (220), wobei das System (200) Folgendes umfasst:
ein Komponentenmanagementsystem (CMS - component management system) (230);
eine Aufzugssystemsteuerung (ESC - elevator system controller) (240) in dem Gebäude (220), die operativ mit den Komponenten (215) gekoppelt ist;
ein Gateway (250), das mit der ESC (240) und den Komponenten (215) über ein erstes Netzwerk (260) und mit dem CMS (230) über ein zweites Netzwerk (270) kommuniziert,
**dadurch gekennzeichnet, dass** das Gateway (250) konfiguriert ist, um:
ein erstes Signal (235A) von dem CMS (230) zu empfangen, das eine Benachrichtigung über den aktualisierten Code (205) für die Komponenten (215) beinhaltet;
ein zweites Signal (235B) von der ESC (240) zu empfangen, das Anweisungen für eine vorläufige Installation des aktualisierten Codes (205) beinhaltet, und danach die vorläufige Installation auszuführen; und
ein drittes Signal (235B) von der ESC (240) zu empfangen, das Anweisungen für eine sekundäre Installation des aktualisierten Codes (205) auf den Komponenten (215) beinhaltet, und danach die sekundäre Installation auszuführen.

2. System (200) nach Anspruch 1, wobei die Komponenten (215) Klassen (210) von Komponenten (215) beinhalten, einschließlich einer oder mehrerer von:
einer ersten Klasse (210A) von Komponenten (215), die eine Aufzugskabine (103) beinhalten;
einer zweiten Klasse (210B) von Komponenten (215), die eine Lobby-Rufstation (104) beinhalten; oder
einer dritten Klasse (210C) von Komponenten (215), die ein Mobiltelefon (105) beinhalten, das eine Software enthält, die die Aufzugskabine (103) ruft.

3. System (200) nach Anspruch 1, wobei das Gateway (250) konfiguriert ist, um die vorläufige Installation auszuführen, die ein Installieren des aktualisierten Codes (205) auf einem virtuellen System (240A), einer ersten Komponente (215A1) innerhalb einer ersten Klasse (210A) von Komponenten (215) oder einer Teilmenge (215A) von Komponenten (215) innerhalb der ersten Klasse (210A) von Komponenten (215) beinhaltet.

4. System (200) nach Anspruch 3, wobei das Gateway (250) konfiguriert ist, um die vorläufige Installation auszuführen, die ein Installieren eines reduzierten Funktionssatzes des aktualisierten Codes (205) auf dem virtuellen System (240A), der ersten Komponente (215A1) innerhalb der ersten Klasse (210A) von Komponenten (215) oder der Teilmenge (215A) von Komponenten (215) innerhalb der ersten Klasse (210A) von Komponenten (215) beinhaltet, oder
wobei das virtuelle System (240A) eine Simulation der ersten Komponente (215A1) ist, die durch die ESC (240) gesteuert wird.

5. System (200) nach Anspruch 1, wobei das Gateway (250) konfiguriert ist, um die sekundäre Installation auszuführen, die ein Installieren des aktualisierten Codes (205) auf jeder Komponente (215) innerhalb einer ersten Klasse (210A) von Komponenten (215) beinhaltet, und vorzugsweise
das Gateway (250) konfiguriert ist, um die sekundäre Installation auszuführen, die ein Installieren des aktualisierten Codes (205) nacheinander auf verschiedenen Teilmengen der ersten Klasse (210A) von Komponenten (215) beinhaltet, basierend auf einer oder mehreren von: Nutzungsmustern der Teilmengen (215A, 215B, 215C); und Standorten der Komponenten (215) innerhalb des Gebäudes oder innerhalb der Teilmengen (215A, 215B, 215C).

6. System (200) nach Anspruch 1, wobei der aktualisierte Code (205) Software oder Firmware ist.

7. System (200) nach Anspruch 1, wobei das CMS (230) ein Cloud-Dienst ist.

8. System (200) nach Anspruch 7, wobei das Gateway (250) mit den Komponenten (215) über ein Controller-Bereichsnetzwerk (CAN - controller area network) und mit dem CMS (230) über ein Weitverkehrsnetzwerk (WAN - wide area network) kommuniziert.

9. Verfahren zum Installieren eines aktualisierten Codes (205) auf Aufzugskomponenten (215) in einem Gebäude (220), wobei das Verfahren Folgendes umfasst:
Empfangen, durch ein Gateway (250), eines ersten Signals (235A) von einem Komponentenmanagementsystem (CMS - component management system) (230), das eine Benachrichtigung über den aktualisierten Code (205) für die Komponenten (215) beinhaltet; Empfangen, durch das Gateway (250), eines zweiten Signals (235B) von einer Aufzugssystemsteuerung (ESC - elevator system controller) (240), das Anweisungen für eine vorläufige Installation des aktualisierten Codes (205) beinhaltet, und danach Ausführen der vorläufigen Installation; und
Empfangen, durch das Gateway (250), eines dritten Signals (235B) von der ESC (240), das Anweisungen für eine sekundäre Installation des aktualisierten Codes (205) auf den Komponenten (215) beinhaltet, und danach Ausführen der sekundären Installation.

10. Verfahren nach Anspruch 9, wobei die Komponenten (215) Klassen (210) von Komponenten (215) beinhalten, einschließlich einer oder mehrerer von:
einer ersten Klasse (210A) von Komponenten (215), die eine Aufzugskabine (103) beinhalten;
einer zweiten Klasse (210B) von Komponenten (215), die eine Lobby-Rufstation (104) beinhalten; oder
einer dritten Klasse (210C) von Komponenten (215), die ein Mobiltelefon (105) beinhalten, das eine Software enthält, die die Aufzugskabine (103) ruft.

11. Verfahren nach Anspruch 9, umfassend
Ausführen, durch das Gateway (250), der vorläufigen Installation durch ein Installieren des aktualisierten Codes (205) auf einem virtuellen System (240A), einer ersten Komponente (215A1) innerhalb einer ersten Klasse (210A) von Komponenten (215) oder einer Teilmenge (215A) von Komponenten (215) innerhalb der ersten Klasse (210A) von Komponenten (215).

12. Verfahren nach Anspruch 11, umfassend
Ausführen, durch das Gateway (250), der vorläufigen Installation durch ein Installieren eines reduzierten Funktionssatzes des aktualisierten Codes (205) auf dem virtuellen System (240A), der ersten Komponente (215A1) innerhalb der ersten Klasse (210A) von Komponenten (215) oder der Teilmenge (215A) von Komponenten (215) innerhalb der ersten Klasse (210A) von Komponenten (215), oder
wobei das virtuelle System (240A) eine Simulation der ersten Komponente (215A1) ist, die durch die ESC (240) gesteuert wird.

13. Verfahren nach Anspruch 9, umfassend
Ausführen, durch das Gateway (250), der sekundären Installation durch ein Installieren des aktualisierten Codes (205) auf jeder Komponente (215) innerhalb einer ersten Klasse (210A) von Komponenten (215), und vorzugsweise umfassend:
Ausführen, durch das Gateway (250), der sekundären Installation durch ein Installieren des aktualisierten Codes (205), nacheinander auf verschiedenen Teilmengen der ersten Klasse (210A) von Komponenten (215), basierend auf einer oder mehreren von: Nutzungsmustern der Teilmengen (215A, 215B, 215C); und Standorten der Komponenten (215) innerhalb des Gebäudes oder innerhalb der Teilmengen (215A, 215B, 215C).

14. Verfahren nach Anspruch 9, wobei der aktualisierte Code (205) Software oder Firmware ist.

15. Verfahren nach Anspruch 9, wobei das CMS (230) ein Cloud-Dienst ist, und vorzugsweise wobei das Verfahren Folgendes umfasst:
Kommunizieren, durch das Gateway (250), mit den Komponenten (215) über ein Controller-Bereichsnetzwerk (CAN - controller area network) und mit dem CMS (230) über ein Weitverkehrsnetzwerk (WAN - wide area network).

## Revendications

1. Système d'ascenseur (200) pour l'installation d'un code mis à jour (205) sur des composants d'ascenseur (215) dans un bâtiment (220), le système (200) comprenant :
un système de gestion de composants (CMS) (230) ;
un dispositif de commande de système d'ascenseur (ESC) (240) dans le bâtiment (220), couplé de manière opérationnelle aux composants (215) ;
une passerelle (250) qui communique avec l'ESC (240) et les composants (215) sur un premier réseau (260) et avec le CMS (230) sur un second réseau (270),
**caractérisé en ce que** la passerelle (250) est configurée pour : recevoir un premier signal (235A) du CMS (230) qui comporte une notification de code mis à jour (205) pour les composants (215) ; recevoir un deuxième signal (235B) de l'ESC (240) qui comporte des instructions pour une installation préliminaire du code mis à jour (205), et, par la suite, exécuter l'installation préliminaire ; et
recevoir un troisième signal (235B) de l'ESC (240) qui comporte des instructions pour une installation secondaire du code mis à jour (205) sur les composants (215), et, par la suite, exécuter l'installation secondaire.

2. Système (200) selon la revendication 1, dans lequel les composants (215) comportent des classes (210) de composants (215), comportant l'une ou plusieurs des classes suivantes :
une première classe (210A) de composants (215) qui comporte une cabine d'ascenseur (103) ;
une deuxième classe (210B) de composants (215) qui comporte un poste d'appel de hall (104) ; ou
une troisième classe (210C) de composants (215) qui comporte un téléphone portable (105) contenant un logiciel qui appelle la cabine d'ascenseur (103).

3. Système (200) de la revendication 1, dans lequel la passerelle (250) est configurée pour exécuter l'installation préliminaire, comportant l'installation du code mis à jour (205) sur un système virtuel (240A), sur un premier composant (215A1) d'une première classe (210A) de composants (215), ou sur un sous-ensemble (215A) de composants (215) de la première classe (210A) de composants (215).

4. Système (200) de la revendication 3, dans lequel la passerelle (250) est configurée pour exécuter l'installation préliminaire, comportant l'installation d'un ensemble de fonctions réduit du code mis à jour (205) sur le système virtuel (240A), sur le premier composant (215A1) de la première classe (210A) de composants (215), ou sur le sous-ensemble (215A) de composants (215) de la première classe (210A) de composants (215), ou
le système virtuel (240A) est une simulation du premier composant (215A1) commandé par l'ESC (240).

5. Système (200) selon la revendication 1, dans lequel la passerelle (250) est configurée pour exécuter l'installation secondaire, comportant l'installation du code mis à jour (205) sur chaque composant (215) d'une première classe (210A) de composants (215), et de préférence
la passerelle (250) est configurée pour exécuter l'installation secondaire, comportant l'installation du code mis à jour (205), consécutivement sur différents sous-ensembles de la première classe (210A) de composants (215) sur la base de l'un ou plusieurs des éléments suivants : modèles d'utilisation des sous-ensembles (215A, 215B, 215C) ; et emplacements des composants (215) dans le bâtiment ou dans les sous-ensembles (215A, 215B, 215C).

6. Système (200) de la revendication 1, dans lequel le code mis à jour (205) est un logiciel ou un micrologiciel.

7. Système (200) de la revendication 1, dans lequel le CMS (230) est un service cloud.

8. Système (200) de la revendication 7, dans lequel la passerelle (250) communique avec les composants (215) sur un réseau de zone de commande (CAN) et avec le CMS (230) sur un réseau étendu (WAN).

9. Procédé d'installation d'un code mis à jour (205) sur des composants d'ascenseur (215) dans un bâtiment (220), le procédé comprenant :
la réception, par une passerelle (250), d'un premier signal (235A) d'un système de gestion de composants (CMS) (230) qui comporte une notification de code mis à jour (205) pour les composants (215) ;
la réception, par la passerelle (250), d'un deuxième signal (235B) d'un dispositif de commande de système d'ascenseur (ESC) (240) qui comporte des instructions pour une installation préliminaire du code mis à jour (205), et, par la suite, l'exécution de l'installation préliminaire ; et
la réception, par la passerelle (250), d'un troisième signal (235B) de l'ESC (240) qui comporte des instructions pour une installation secondaire du code mis à jour (205) sur les composants (215), et, par la suite, l'exécution de l'installation secondaire.

10. Procédé selon la revendication 9, dans lequel les composants (215) comportent des classes (210) de composants (215), comportant l'une ou plusieurs des classes suivantes :
une première classe (210A) de composants (215) qui comporte une cabine d'ascenseur (103) ;
une deuxième classe (210B) de composants (215) qui comporte un poste d'appel de hall (104) ; ou
une troisième classe (210C) de composants (215) qui comporte un téléphone portable (105) contenant un logiciel qui appelle la cabine d'ascenseur (103).

11. Procédé selon la revendication 9, comprenant
l'exécution, par la passerelle (250), de l'installation préliminaire en installant le code mis à jour (205) sur un système virtuel (240A), sur un premier composant (215A1) d'une première classe (210A) de composants (215), ou sur un sous-ensemble (215A) de composants (215) de la première classe (210A) de composants (215).

12. Procédé selon la revendication 11, comprenant
l'exécution, par la passerelle (250), de l'installation préliminaire en installant un ensemble de fonctions réduit du code mis à jour (205) sur le système virtuel (240A), sur le premier composant (215A1) de a première classe (210A) de composants (215), ou sur le sous-ensemble (215A) de composants (215) de la première classe (210A) de composants (215), ou
le système virtuel (240A) est une simulation du premier composant (215A1) commandé par l'ESC (240).

13. Procédé selon la revendication 9, comprenant
l'exécution, par la passerelle (250), de l'installation secondaire en installant le code mis à jour (205) sur chaque composant (215) d'une première classe (210A) de composants (215), et comprenant de préférence :
l'exécution, la passerelle (250), de l'installation secondaire en installant le code mis à jour (205), consécutivement sur différents sous-ensembles de la première classe (210A) de composants (215) sur la base de l'un ou plusieurs des éléments suivants : modèles d'utilisation des sous-ensembles (215A, 215B, 215C) ; et emplacements des composants (215) dans le bâtiment ou dans les sous-ensembles (215A, 215B, 215C).

14. Procédé selon la revendication 9, dans lequel le code mis à jour (205) est un logiciel ou un micrologiciel.

15. Procédé selon la revendication 9, dans lequel le CMS (230) est un service cloud, et de préférence dans lequel le procédé comprend
la communication, par la passerelle (250), avec les composants (215) sur un réseau de zone de commande (CAN) et avec le CMS (230) sur un réseau étendu (WAN).
